# EUROPEAN PATENT APPLICATION

(11) **EP 2 701 388 A2**
(43) Date of publication of application: **26.02.2014**
(21) Application number: 13180631.7
(22) Date of filing: 16.08.2013
(51) Int. Cl.: H04N 9/31, G06F 3/03

(54) **Method for processing event of projector using pointer and an electronic device thereof**

(30) Priority: 21.08.2012 KR 20120091422
(71) Applicant: Samsung Electronics Co., Ltd, Gyeonggi-do 443-742 (KR)
(72) Inventor: Song, Se-Jun, Seoul (KR)
(74) Representative: Birchenough, Lewis

(57) **Abstract**

A method for performing a function of an electronic device includes outputting an image outside the electronic device, capturing the output image; detecting a trace of a pointer in the captured image, and performing a preset function corresponding to the detected trace of the pointer.

## Description

### TECHNICAL FIELD

The present disclosure relates generally to event processing of an electronic device. More particularly, the present disclosure relates to a method and an apparatus for processing an event of an electronic device including a projector.

### BACKGROUND

As electronic devices such as smart phones and tablet Personal Computers (PC) rapidly develop, an electronic device for wireless voice communication and information exchange has become an effective necessity in modern life. When first introduced, the electronic device provided the features of portability and wireless communication. As technology has advanced and wireless Internet is adopted, the electronic devices are advancing to multimedia devices beyond a mere portable device allowing the wireless communication and support such functions as schedule management, games, remote control, image capturing, and projecting, to thus provide diverse functions.

In recent, electronic devices supporting the projector function has released. The electronic device including the projector can output a video and an image onto an external screen. Such a projector function can be used for a presentation of a user. Mostly, for clearer communication in the presentation using the projector, a presenter can highlight a specific point of the image output onto the external screen using a pointer such as laser pointer. However, most presenters give the presentation using the pointer near the external screen onto which the image is output. Accordingly, to generate a particular event on the output image, the presenter needs to walk to the electronic device in person and to control to generate the particular event. For example, to change the output presentation image, the presenter needs to walk to the electronic device in person and control the electronic device. In this case, the presenter has to frequently come and go between the image output location and the electronic device for the presentation. In this regard, what is needed is a method for remotely controlling the projector using the pointer with ease.

### SUMMARY

To address the above-discussed deficiencies, embodiments of the present disclosure provide a method and an apparatus for processing an event according to a pointer when an electronic device outputs an image through a projector.

Certain embodiments of the present disclosure include a method and an apparatus for capturing an image output through a projector in an electronic device.

Certain embodiments of the present disclosure include a method and an apparatus for tracking a trace of a pointer by analyzing an image output through a projector in an electronic device.

Certain embodiments of the present disclosure include a method and an apparatus for executing a function according to a trace of a pointer by analyzing an image output through a projector in an electronic device.

Certain embodiments of the present disclosure provide a method and an apparatus for outputting an image to other display device through a wired or wireless communication device and a data cable wire, and executing a function according to a trace of a pointer by analyzing an image in an electronic device

In certain embodiments of the present disclosure, a method for performing a function of an electronic device includes outputting an image outside the electronic device; capturing the output image; detecting a trace of a pointer in the captured image; and performing a preset function corresponding to the detected trace of the pointer.

In certain embodiments of the present disclosure, an electronic device for performing a function includes one or more processors; an image output and capturing device; a memory; and one or more programs stored to the memory to be executed by the one or more processors. The program includes instructions for outputting an image outside the electronic device, capturing the output image, detecting a trace of a pointer in the captured image, and performing a preset function corresponding to the detected trace of the pointer.

Other aspects, advantages, and salient features of the disclosure will become apparent to those skilled in the art from the following detailed description, which, taken in conjunction with the annexed drawings, discloses embodiments.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:

FIG. 1 illustrates an electronic device for processing an event of a projector using a pointer according to embodiments of the present disclosure;

FIG. 2 illustrates the electronic device including a camera and the projector which face different directions according to embodiments of the present disclosure;

FIG. 3A illustrates a method for processing the event of the projector using the pointer according to embodiments of the present disclosure;

FIG. 3B illustrates a device for processing the event using the pointer according to embodiments of the present disclosure;

FIGS. 4A and 4B illustrate a method for processing the event by analyzing an image captured by the camera in the electronic device according to embodiments of the present disclosure;

FIG. 5 illustrates an event processing for switching from a presentation mode of the electronic device to a next page according to embodiments of the present disclosure;

FIG. 6 illustrates an event processing for switching from the presentation mode of the electronic device to a previous page according to embodiments of the present disclosure;

FIG. 7 illustrates an event processing for erasing whole data generated in the presentation mode of the electronic device according to embodiments of the present disclosure;

FIG. 8A illustrates an event processing for operating a deletion mode in the presentation mode of the electronic device according to embodiments of the present disclosure;

FIG. 8B illustrates an event processing for operating a writing mode in the presentation mode of the electronic device according to a embodiments of the present disclosure;

FIG. 9 illustrates a function corresponding to a movement type of the pointer in a normal mode of the electronic device according to embodiments of the present disclosure;

FIG. 10 illustrates an event processing for switching to the next page in the normal mode of the electronic device according to embodiments of the present disclosure;

FIG. 11 illustrates an event processing for switching to the previous page in the normal mode of the electronic device according to embodiment of the present disclosure;

FIG. 12 illustrates an event processing for popping up a new window in the normal mode of the electronic device according to embodiments of the present disclosure;

FIG. 13 illustrates an event processing for closing the window in the normal mode of the electronic device according to embodiments of the present disclosure;

FIG. 14 illustrates the device for outputting a screen onto her display device using a wireless communication technique in the electronic device according to embodiments of the present disclosure; and

FIG. 15 illustrates the device for outputting the screen onto the other display device using a wired communication technique or a data cable wire in the electronic device according to embodiments of the present disclosure.

Throughout the drawings, like reference numerals will be understood to refer to like parts, components and structures.

### DETAILED DESCRIPTION

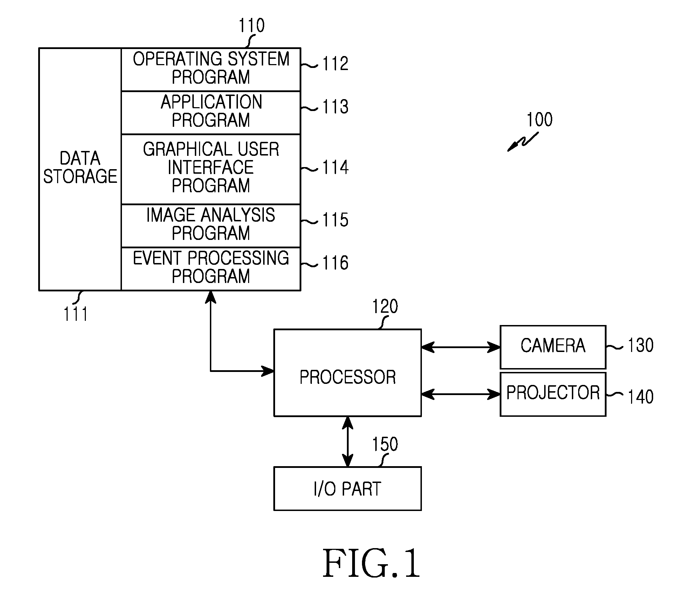

FIGURES 1 through 15, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged wireless communication device. The following description with reference to the accompanying drawings is provided to assist in a comprehensive understanding of embodiments of the invention as defined by the claims and their equivalents. It includes various specific details to assist in that understanding but these are to be regarded as examples. Accordingly, those of ordinary skill in the art will recognize that various changes and modifications of the embodiments described herein can be made without departing from the scope and spirit of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of embodiments of the present disclosure are provided for illustration purposes and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

FIG. 1 is a block diagram of an electronic device for processing an event of a projector using a pointer according to embodiments of the present disclosure.

Referring to FIG. 1, the electronic device 100 includes a memory 110, a processor 120, a camera 130, a projector 140, and an Input/Output (IO) part 150. A plurality of memories 110 and a plurality of processors 120 can be equipped.

The memory 110 includes a data storage 111, an operating program 112, an application program 113, a graphical user interface program 114, an image analysis program 115, and an event processing program 116. Since the program being a software component can be represented as a set of instructions, the program may be referred to as an instruction set. The program may be also referred to as a module.

The memory 110 can store one or more programs including the instructions for realizing embodiments of the present disclosure.

The data storage 111 stores data generating in the operations of the electronic device 100. The data storage 111 can store image information such as image edge information analyzed by the image analysis program 115, matrix transformation information, and RGB data information of image pixel. In addition, the data storage 111 can store corresponding functions per trace of a pointer. For example, when the pointer moves from the left to the right in the image, the data storage 111 can store a function for switching to a next page of the corresponding image. In so doing, the pointer can highlight a particular region from a distance or at close range. For example, the pointer indicates a pointer generated on the image by an external device which supports a laser pointing function.

The operating system program 112 (e.g., the embedded operating system such as WINDOWS, LINUX, Darwin, RTXC, UNIX, OS X, or VxWorks) includes various software components for controlling general system operations. These include, e.g., memory management and control, storage hardware (device) control and management, and power control and management. The operating system program 112 processes normal communication between various hardware (devices) and software components (modules).

The application program 113 includes applications such as browser, e-mail, message, word processing, address book, widget, Digital Right Management (DRM), voice recognition, voice reproduction, position determining function, location based service, and Power Point (PPT).

The graphical user interface program 114 includes at least one software component for providing a user interface using graphics between a user and the electronic device 100. That is, the graphical user interface program 114 includes at least one software component for displaying user interface information on the I/O part 150. For example, the graphical user interface program 114 controls to output a presentation image to the I/O part 150, and to output the same image to outside through the projector 140. For example, the graphical user interface program 114 controls to display a screen allowing the user to switch a presentation mode and a normal mode on the I/O part 150.

Herein, when the pointer moves in or out of the image, the presentation mode processes a particular event. When the pointer moves inside the image, the presentation mode outputs graphical data corresponding to the movement type of the pointer in a writing mode, or deletes the graphical data corresponding to the movement type of the pointer in a deletion mode. That is, the electronic device 100 in the presentation mode can output data of every type corresponding to the trace of the pointer moving by the user control. The normal mode processes, when the pointer moves inside the image, a particular event according to the movement type of the pointer.

The image analysis program 115 detects four edges in the image captured by the camera 130 or the projector 140, and then transforms a matrix of the captured image. In so doing, the image analysis program 115 sets a region and a size of the image based on the detected edges, transforms the matrix of the captured image, and thus adjusts a view point difference between the image output through the projector 140 and the image captured by the camera 130 or the projector 140. When the output image and the captured image have the identical view point, the image analysis program 115 may not transform the matrix at all.

Next, the image analysis program 115 can detect the pointer in the image, and determine based on a color, a light spreading, and a shape of the detected pointer whether a pointer click event occurs. For example, upon detecting a red pointer, the image analysis program 115 can determine the click event. When detecting the pointer of other colors, the image analysis program 115 determines no click event. For example, the image analysis program 115 determines the click event when detecting a heart-shaped pointer, and determines no click event when detecting the pointer of other shapes. In so doing, the color, the light spreading, and the shape of the pointer for determining whether the pointer click event occurs can be predefined according to its design, and can be changed by the user. Further, the light spreading of the pointer can be controlled by changing a pointer diameter where the image actually falls on through distance adjustment between the light emitting part and a lens using the external device which supports the pointing function. Herein, the click event can process a preset event based on the trace of the pointer, or write or detect the graphical data on the image output to the outside.

Hereafter, the click event of the pointer is determined by detecting the color of the pointer to ease the understanding. Still, the present disclosure is equally applicable to the click event determined using the shape or the light spreading of the pointer.

For example, the image analysis program 115 detects RGB data per pixel of the captured image, and searches for the pixel matching the RGB data of the pointer among the pixels of the captured image. In so doing, when detecting the pixel matching the RGB data of the pointer among the pixels of the captured image, the image analysis program 115 determines that the pointer is located at the corresponding pixel. For example, when the RGB data of the pointer is R:255, G:0, B:0 or R:0, G:0, B:255, the image analysis program 115 searches the pixels of the captured image for the pixel of the RGB data R:255, G:0, B:0 or R:0, G:0, B:255, and determines the searched pixel as the pixel including the pointer. In so doing, the image analysis program 115 determines the click event when detecting the pixel of R:255, G:0, B:0, and determines no click event when detecting the pixel of R:0, G:0, B:255. As such, the image analysis program 115 can determine the click event and track the pointer by analyzing the RGB data of the pointer detected in the images captured by the camera 130 or the projector 140 in real time.

The event processing program 116 controls to perform the function according to the trace of the pointer obtained by the image analysis program 115. For example, when the trace of the pointer obtained by the image analysis program 115 moves from the left to the right in the image, the event processing program 116 can output the image of the next page instead of the current output image. For example, when the trace of the pointer obtained by the image analysis program 115 moves from the right to the left in the image, the event processing program 116 can output the image of the previous page instead of the current output image.

The processor 120 can include at least one processor and a peripheral interface, which are not shown. The processor 120 executes a particular program (instruction set) stored in the memory 110 and performs a plurality of particular functions corresponding to the program.

The camera 130 includes camera related software components for camera related process and functions. Herein, the camera 130 captures the image output through the projector 140, using a camera lens (not shown) disposed in the same direction as a lens (not shown) of the projector 140. In so doing, the image captured by the camera 130 can include the image including the pointer.

The projector 140 indicates a device for magnifying or demagnifying the image on a region (e.g., an external screen and a building wall) outside the I/O part 150 of the electronic device 100. In so doing, the image output by the projector 140 includes every image output by the I/O part 150 of the electronic device 100, and is the same as the image output by the I/O part 150 of the electronic device 100. For example, the projector 140 can magnify and output a PPT image of the electronic device 100 onto the wall. The projector 140 can function as the camera 130. For example, when the camera 130 is absent or the camera 130 and the projector 140 face different directions, the projector 140 captures the image output through the projector 140.

The I/O part 150 includes an input device for inputting data and an output device for outputting data, and provides an interface to the user. For example, the I/O part 150 can be a touch screen for inputting and outputting the data at the same time. The I/O part 150 can receive data for the image output of the projector 140from the user, and output the screen according to the user input when the data is input from the user. For example, the I/O part 150 can receive presentation data from the user and provide the user with the presentation corresponding to the input data.

In addition, the I/O part 150 can include a wired/wireless network device or a data cable wire to output the image of the electronic device 100 to other display device. The I/O part 150 can detect the pointer by capturing the corresponding output image using the camera 130 in the same manner as aforementioned. Herein, the wired/wireless network device indicates an Ethernet access device, Wi-Fi technology, or Bluetooth technology, and can output the image to an external display device using the corresponding technology. That is, even the electronic device without projector 140 can output the image to the external display device through the I/O part 150.

The image can be output using the data cable wire. The data cable can employ various cables for outputting the data to the outside, such as RGB data cable, High Definition Multimedia Interface (HDMI) data cable, and Digital Visual Interface (DVI) data cable.

The electronic device 100 can further include a communication part (not shown) for providing the image captured by the camera 130 and the projector 140 to other electronic device of the user in real time under the user control.

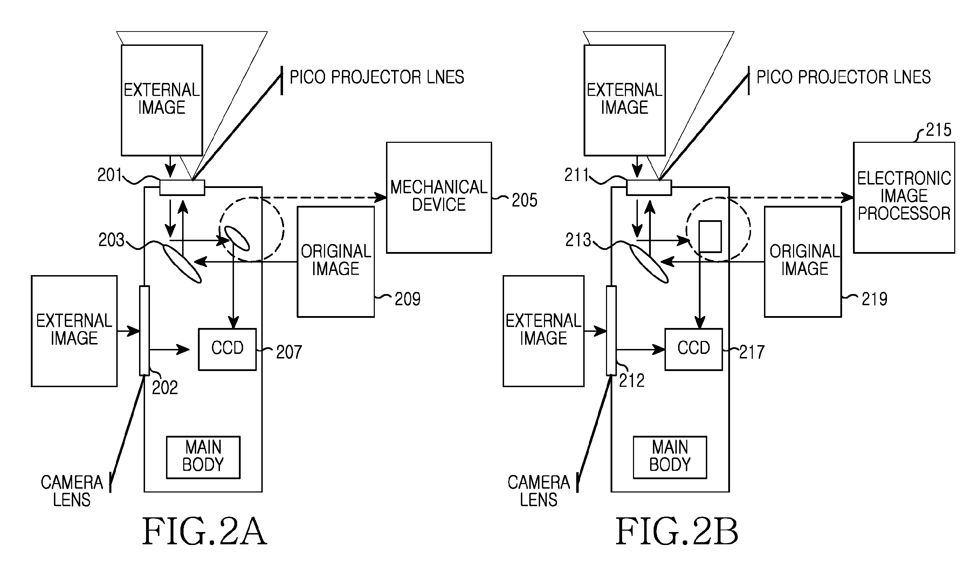

FIGS. 2A and 2B illustrate a block diagram of the electronic device including the camera and the projector which face different directions according to embodiments of the present disclosure.

As shown in FIGS. 2A and 2B, when a lens 201 and 211 of the projector 140 for outputting the image and a lens 202 and 212 of the camera 130 for capturing the image face different directions in the electronic device 100, the electronic device 100 cannot capture the image output by the projector 140 using the camera 130. Accordingly, the electronic device 100 including the lens 202 and 212 of the camera 130 and the lens 201 and 211 of the projector 140 in the different directions can include a mechanical or electronic image processor for outputting and capturing the image through the lens 201 and 211 of the projector 140 as shown in FIGS. 2A and 2B.

For example, as shown in FIG. 2A, the electronic device 100 can output an original image 209 to the outside through the first reflexive mirror 203 and the projector lens 201 and concurrently capture the external image through the projector lens 201, and then reflect the captured external image to a Charge Coupled Device (CCD) 207 through the first reflexive mirror 203 and the mechanical device 205. Herein, the mechanical device 205 can employ an optical device having a reflexive mirror or multiple view angles. For example, as shown in FIG. 2B, the electronic device 100 can output an original image 219 to the outside through the first reflexive mirror 213 and the projector lens 211 and concurrently capture the original image through the projector lens 211, and then reflect the captured image to a CCD 217 through the first reflexive mirror 213 and the electronic image processor 215.

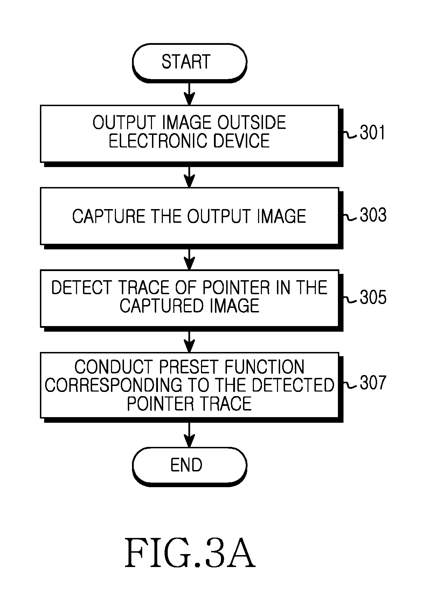

FIG. 3A illustrates a method for processing the event using the pointer in the electronic device according to embodiments of the present disclosure.

Referring to FIG. 3A, the electronic device 100 outputs the image outside the electronic device 100 in block 301. In so doing, the output image is the same as the image output to the I/O part 150, and can be the magnified or minified image of the image output by the I/O part 150. For example, the electronic device 100 can magnify the PPT image output through the I/O part 150 and output the magnified PPT image onto the wall.

In block 303, the electronic device 100 captures the image output in block 301. That is, the electronic device 100 captures the output image outside the electronic device 100, through the camera 130 or the projector 140. When the electronic device 100 includes the camera 130, the electronic device can capture the image through the camera 130. By contrast, when the electronic device 100 includes no camera 130 or the camera 130 and the projector 140 face different directions, the electronic device 100 can capture the image through the projector 140.

In block 305, the electronic device 100 detects the trace of the pointer in the captured image. Herein, the electronic device 100 can detect the trace of the pointer by detecting the preset color, light spreading, and shape of the pointer.

In block 307, the electronic device 100 conducts a preset function corresponding to the trace of the pointer. For example, when the detected trace of the pointer moves from the left to the right in the image, the electronic device 100 can output the image of the next page instead of the current output image. For example, when the detected trace of the pointer moves from the right to the left in the image, the electronic device 100 can output the image of the previous page instead of the current output image.

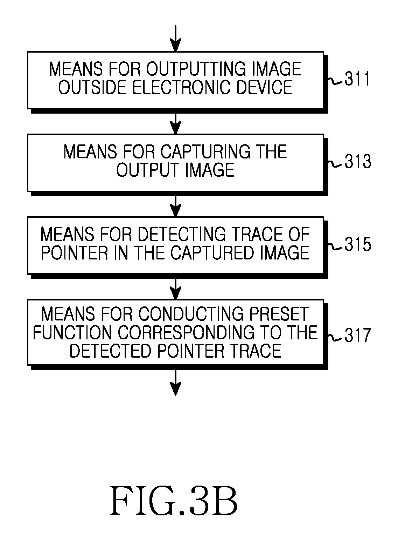

FIG. 3B illustrates a device for processing the event using the pointer in the electronic device according to embodiments of the present disclosure.

Referring to FIG. 3B, the electronic device 100 includes a means 311 for outputting the image outside the electronic device 100, and a means 313 for capturing the output image. The electronic device 100 can further include a means 315 for detecting the trace of the pointer in the captured image, and a means 317 for conducting the preset function corresponding to the detected trace of the pointer.

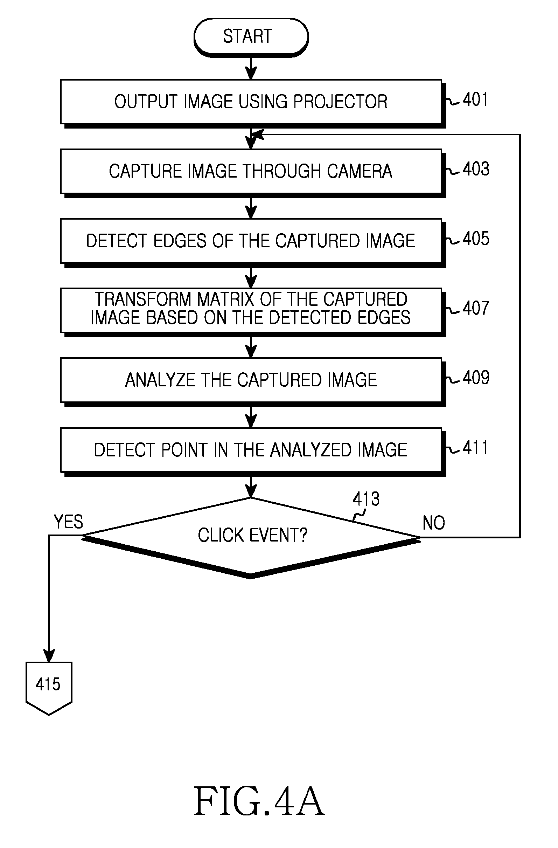

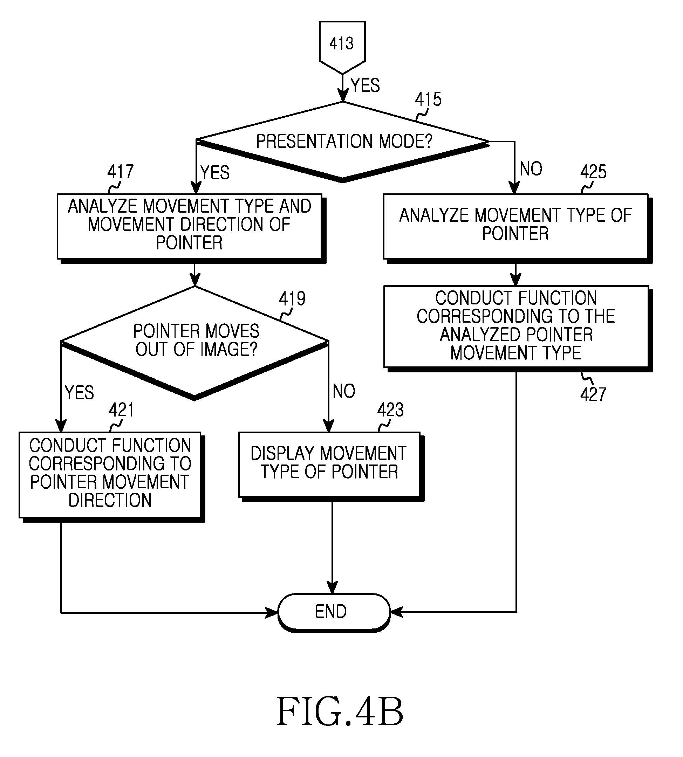

FIGS. 4A and 4B illustrate a method for processing the event by analyzing the image captured by the camera in the electronic device according to embodiments of the present disclosure.

Referring to FIGS. 4A and 4B, the electronic device 100 outputs the image using the projector 140 in block 401. In so doing, the electronic device 100 outputs the image outside the electronic device 100 using the projector 140. For example, the electronic device 100 outputs the image onto the inner wall of the building using the projector 140.

Next, the electronic device 100 captures the image using the camera 130 in block 403, detects the edges of the captured image in block 405, transforms the matrix of the captured image based on the detected edges in block 407, and analyzes the captured image in block 409. More specifically, the electronic device 100 determines the size and the region of the image by detecting all of the four edges of the captured image, transforms the matrix of the captured image in order to adjust the view point difference between the image output and the captured image based on the four detected edges, and then analyzes the RGB data per pixel of the captured image.

In block 411, the electronic device 100 detects the pointer in the analyzed image. More specifically, the electronic device 100 searches the pixels of the analyzed image for the pixel matching the RGB data of the pointer. When the pixels of the captured image include the pixel of the RGB data matching the RGB data of the pointer, the electronic device 100 determines that the pointer is located at the corresponding pixel. For example, when the RGB data of the pointer is R:255, G:0, B:0 or R:0, G:0, B:255, the electronic device 100 searches the pixels of the captured image for the pixel of the RGB data R:255, G:0, B:0 or R:0, G:0, B:255, and determines the searched pixel as the pixel covering the pointer.

Upon detecting the pointer, the electronic device 100 determines whether the detected pointer is the pointer generated by the click event in block 413. More specifically, when the electronic device 100 detects the pointer in the captured image, the detected pointer can be a pointer which highlights a particular point and processes a particular event. In so doing, the electronic device 100 can determine whether the pointer is generated by the click event by recognizing the color, the light spreading, the shape, and the size of the pointer. For example, when the color of the pointer is red, the electronic device 100 can determine that the click event causes the pointer. When the color of the pointer is blue, the electronic device 100 can determine that the pointer merely highlights the point.

When the detected pointer is not caused by the click event, the electronic device 100 returns to step 403.

When the detected pointer is the pointer caused by the click event, the electronic device 100 determines whether it is in the presentation mode in block 415. Herein, the presentation mode processes a particular event when the pointer moves in or out of the image. When the pointer moves inside the image, the presentation mode outputs the graphical data indicating the movement type of the pointer in the writing mode and deletes the graphical data corresponding to the movement type of the pointer in the deletion mode. In so doing, the electronic device 100 can receive data or a key button from the user for switching the presentation mode and the normal mode.

In the presentation mode, the electronic device 100 analyzes the movement type and the movement direction of the pointer in block 417, and then determines whether the pointer leaves the image in block 419. For example, when the electronic device 100 outputs the image onto the wall, the electronic device 100 determines whether the pointer moves in or out of the image.

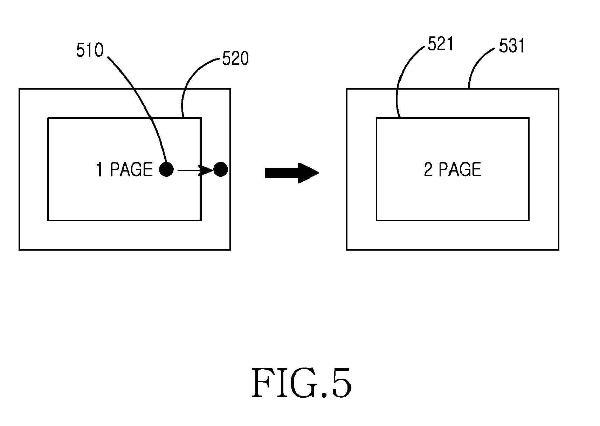

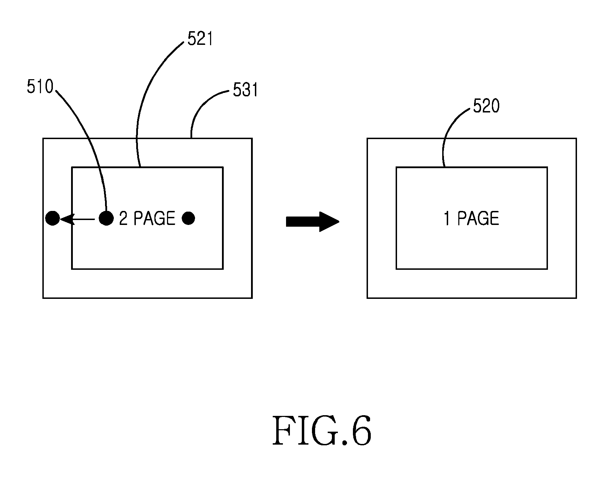

When the pointer moves out of the image, the electronic device 100 conducts the function corresponding to the pointer movement direction in block 421 and then finishes this process. In so doing, the pointer 510 leaving the image can be determined when the pointer moves out of the output image 520 and when the pointer moves in the output image. For example, when the pointer moves to the right inside the output presentation image and leaves the output presentation image 520 as shown in FIG. 5, the electronic device 100 can output the image 521 of the next page 531 instead of the current presentation image 520. For example, when the pointer 510 moves to the left inside the output presentation image 521 and leaves the output presentation image as shown in FIG. 6, the electronic device 100 can output the image 520 of the previous page instead of the current presentation image 521.

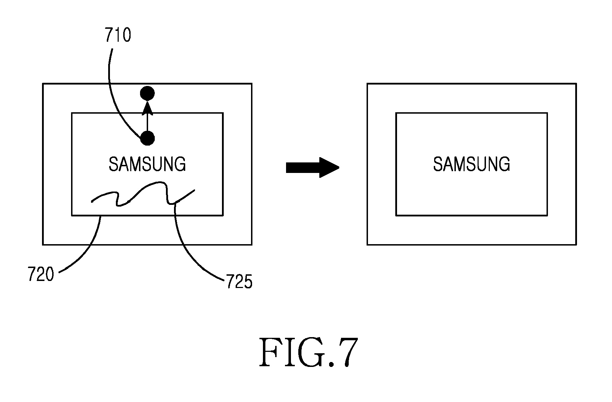

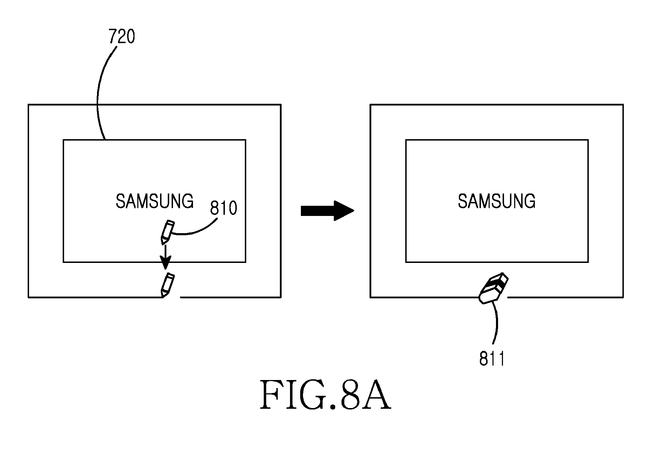

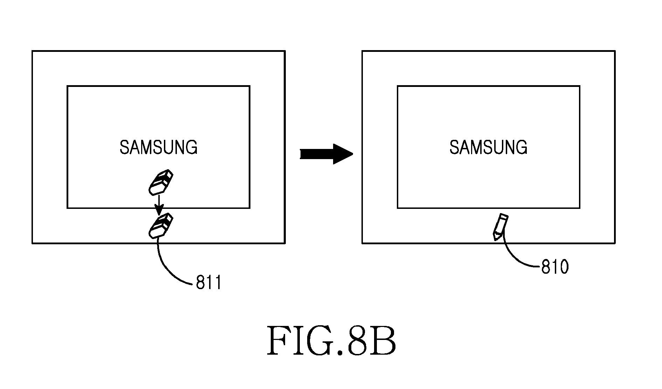

For example, when the pointer 710 moves upwards inside the output presentation image 720 and leaves the output presentation image as shown in FIG. 7, the electronic device 100 can erase the whole data 725 created with the presentation image pointer. For example, when the pointer moves downwards inside the output presentation image 720 and leaves the output presentation image, the electronic device 100 can switch the writing mode for writing data on the presentation image and the deletion mode for deleting the data written on the image 720. When the pointer moves downwards in the writing mode and moves out of the image as shown in FIG. 8A, the electronic device 100 switches the mode from the writing mode to the deletion mode. By contrast, when the pointer moves downwards in the deletion mode and moves out of the image as shown in FIG. 8B, the electronic device 100 switches the mode from the deletion mode to the writing mode. Herein, the electronic device 100 can output an icon (e.g., a pen 810 or an eraser 811) indicating the current writing mode or deletion mode at the location corresponding to the pointer.

According to embodiments of the present disclosure, the function corresponding to the movement direction of the pointer is the function for processing a particular event in the presentation, and can be preset and stored in the electronic device 100 or directly set by the user.

When the pointer does not leave the image, the electronic device 100 adds and outputs the graphics indicating the movement type of the pointer to the current output image or the next output image in real time in block 423, and then finishes this process. In other words, the electronic device 100 can output every data generated using the pointer by the user.

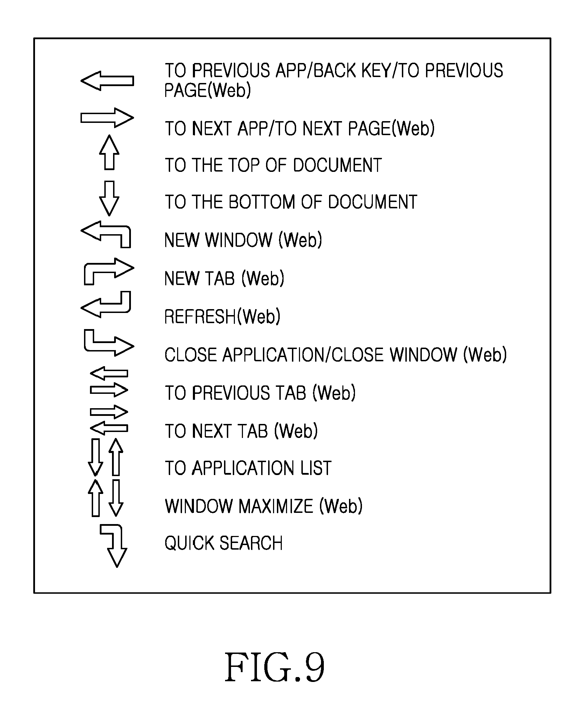

By contrast, when not in the presentation mode, the electronic device 100 analyzes the movement type of the pointer in block 425, conducts the function corresponding to the analyzed movement type of the pointer in block 427, and then finishes this process. For example, the electronic device 100 can perform various functions according to the movement type of the pointer as shown in FIG. 9.

The term "Web" in FIG. 9 accounts for the operation result corresponding to the movement type of the pointer when the electronic device 100 displays an Internet application. For example, when the pointer moves from the right to the left, the electronic device 100 can switch to a previous page during the display of the Internet application and switch to a previous application during the display of other application than the Internet application.

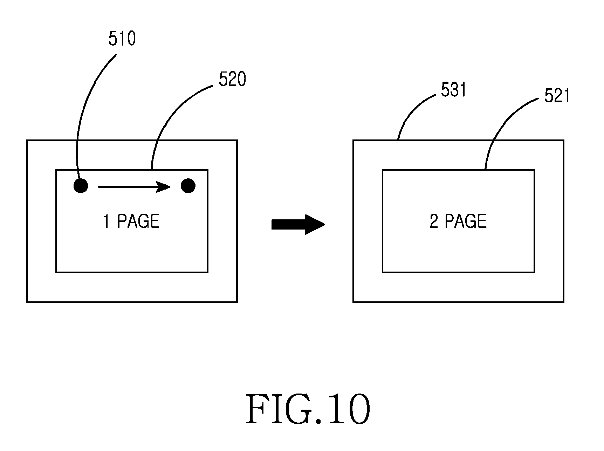

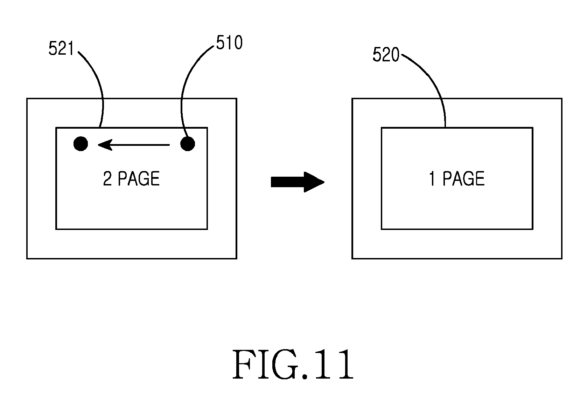

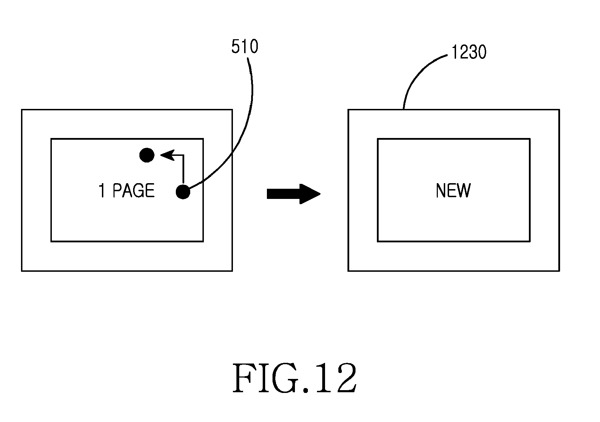

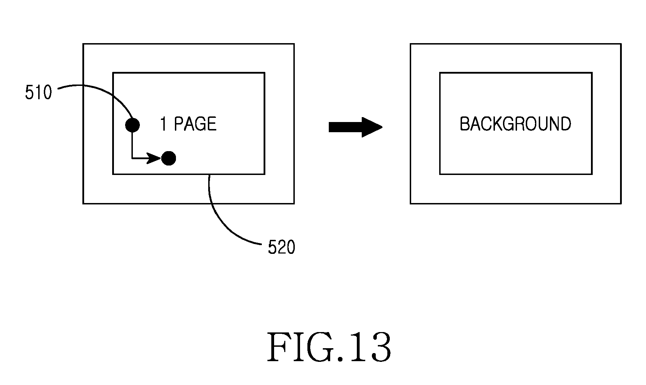

In addition, when the pointer moves to the right inside the image as shown in FIG. 10, the electronic device 100 can output the image 521 of the next page 531 instead of the current output image 520. For example, when the pointer 510 moves to the left inside the image 521 as shown in FIG. 11, the electronic device 100 can output the image 520 of the previous page instead of the current output image. For example, when the pointer 510 moves upwards and then to the left inside the image as shown in FIG. 12, the electronic device 100 can generate and output a new page 1230. For example, when the pointer 510 moves downwards and then to the right inside the image 520 as shown in FIG. 13, the electronic device 100 can close the output window.

Herein, while the electronic device 100 performs the corresponding function according to the movement type of the pointer within the image, the electronic device 100 can perform the corresponding function according to the movement type of the pointer which moves within a preset region of the image, according to its design.

That is, when the pointer moves within the preset region of the image in the normal mode, the electronic device 100 performs the corresponding function according to the movement type of the pointer. When the pointer moves outside the preset region of the image, the electronic device 100 outputs the graphical data indicating the movement type of the pointer.

The electronic device can match, but not limited to, different functions to the movement direction and the movement type of the pointer. In so doing, the match between the movement direction and the movement type of the pointer, and the functions can be preset in the design phase or input by the user.

While the electronic device 100 searches for the pixel of the captured image having the same color as the pointer and thus detects the pointer, the electronic device compares the output image and the captured image and detects the pointer by analyzing the difference between the output image and the captured image. Also, the electronic device 100 stores the captured image on a time basis, analyzes the difference between the previously captured image and the currently captured image, and thus detects the pointer.

In addition, when it is difficult to detect the pointer due to the similar color around the pointer or the lighting, the pointer can be detected by detecting and removing noise using a neural algorithm or other mathematical algorithm.

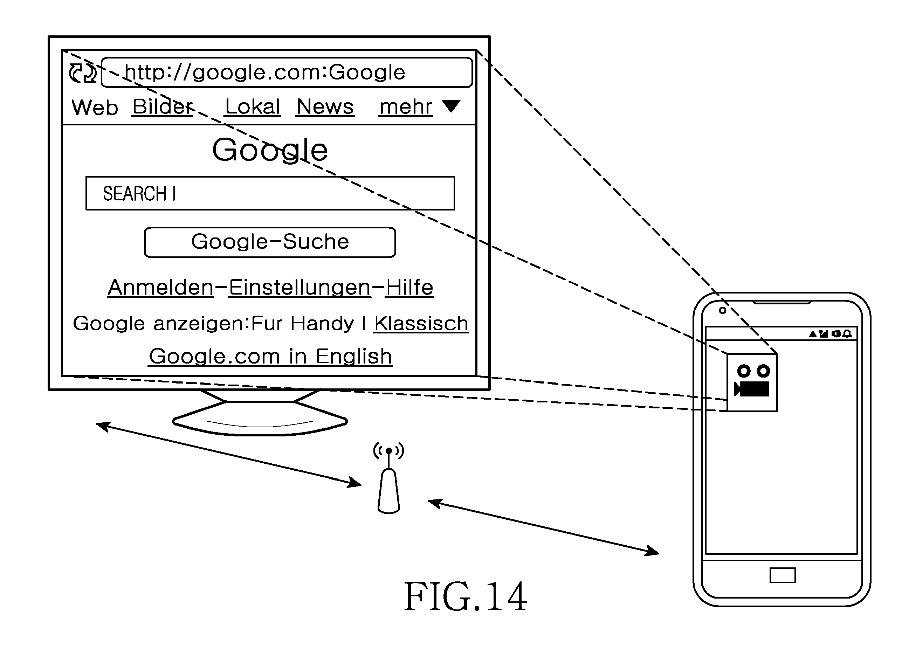

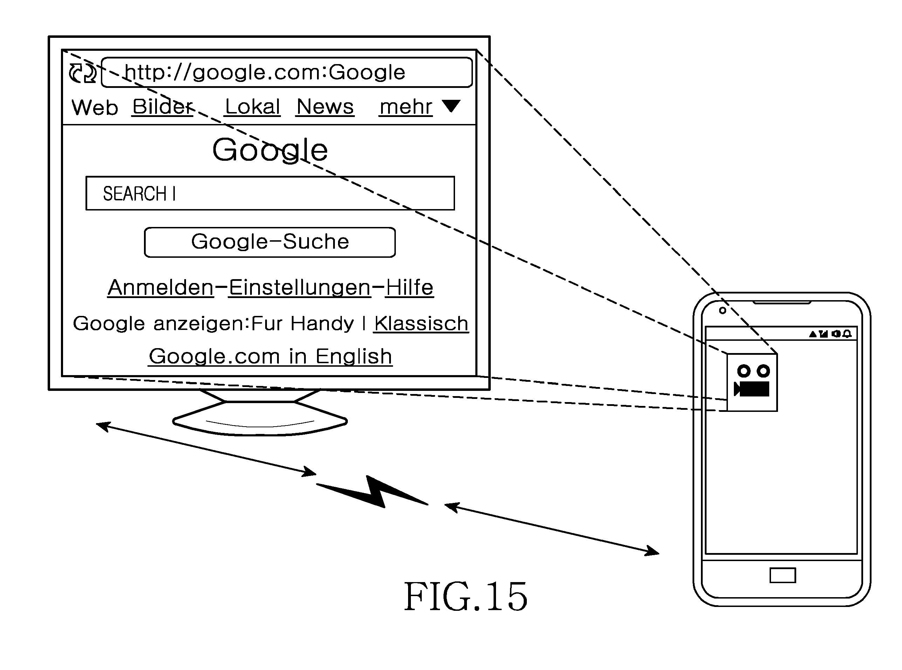

The electronic device 100 can output the image to other display device, not the projector, using the wired and wireless communication technologies as shown in FIGS. 14 and 15, and then detect the pointer in the above-stated manner.

The embodiments and various functional operations of the present disclosure described herein can be implemented in computer software, firmware, hardware, or in combinations of one or more of them including the structures disclosed in this specification and their structural equivalents. The embodiments of the present disclosure can be implemented as one or more computer program products, that is, one or more data processors, or one or more modules of computer program instructions encoded on a non-transient computer-readable medium to control the device.

The non-transient computer-readable medium can be a machine-readable storage medium, a machine-readable storage substrate, a memory device, a material affecting a machine-readable propagated stream, or a combination of one or more of these. The term 'data processor' encompasses every device, apparatus, and machine including, for example, a programmable processor, a computer, a multiple processors, or a computer, for processing data. The device can be added to the hardware and include a program code for creating an execution environment of a corresponding computer program, for example, a code for constituting processor firmware, a protocol stack, a database management system, an operating system, or a combination of one or more of these.

While the disclosure has been shown and described with reference to certain embodiments, it will be understood by those skilled in the art that various changes in form and details may be made therein without departing from the spirit and scope of the invention as defined by the appended claims and their equivalents.

## Claims

1. A method in an electronic device, comprising:
outputting an image outside the electronic device;
capturing the output image;
detecting a trace of a pointer in the captured image; and
performing a preset function corresponding to the detected trace of the pointer.

2. The method of claim 1, wherein outputting of the image outside the electronic device comprises:
outputting the image through a projector,
wherein capturing of the output image further comprises:
capturing the image through a projector lens, and
wherein the capturing of the image through the projector lens comprises:
capturing the image using at least one of:
a mechanical device which reflects the image obtained from the projector lens, and
an electronic image processor which forwards the image obtained from the projector lens.

3. The method of claim 1, wherein capturing of the output image comprises:
capturing the image through a camera lens.

4. The method of claim 1, wherein outputting of the image outside the electronic device comprises:
outputting the image outside the electronic device using at least one of wired or wireless network equipment and a wired data output device of the electronic device.

5. The method of claim 1, wherein detecting of the trace of the pointer in the captured image comprises:
determining a region of the output image;
searching pixels of the captured image for a pixel having the same color as a color of the pointer; and
detecting the trace of the pointer based on the searched pixel.

6. The method of claim 5, further comprising, after determining the region of the output image:
in response to determining there is a view point difference between the output image and the captured image, adjusting the view point difference; and
determining an image of the adjusted view point difference as the captured image.

7. The method of claim 1, wherein detecting of the trace of the pointer in the captured image comprises:
detecting at least one of a color, a light spreading, a shape, and a size of the pointer in the captured image; and
determining an operation mode of the electronic device based on at least one of the color, the light spreading, the shape, and the size of the detected pointer.

8. The method of claim 7, wherein performing of the preset function corresponding to the detected trace of the pointer comprises:
determining the function corresponding to the detected point trace among functions prestored on a trace basis according to the determined operation mode of the electronic device; and
performing the determined function.

9. The method of claim 8, wherein the performing of the determined function comprises:
in response to determining the determined operation mode of the electronic device is a first mode, at least one of
performing a preset function corresponding to the trace of the pointer which moves in the image,
performing a preset function corresponding to the trace of the pointer which moves out of the image, or
outputting graphical data indicating the trace of the pointer which moves inside the image; and
in response to determining the determined operation mode of the electronic device is a second mode, performing a preset function corresponding to the trace of the pointer which moves inside a preset region of the image.

10. The method of claim 1, wherein the preset function corresponding to the trace comprises at least one of page switching, writing and deletion mode switching, deletion of whole data generated in the writing mode, document section movement, new window popup, new tab popup, refresh, window exit, tab switching, movement to taskbar, window resizing, and quick search box popup.

11. An electronic device for performing a function, comprising:
one or more processors;
an image output and capturing device;
a memory; and
one or more programs stored to the memory configured to be executed by the one or more processors,
wherein the program comprises instructions , when executed, cause the one or more processor to:
output an image outside the electronic device,
capture the output image,
detect a trace of a pointer in the captured image, and
perform a preset function corresponding to the detected trace of the pointer.

12. The electronic device of claim 11, further comprising:
a projector,
wherein the projector is configured to:
output the image, and
capture the image using at least one of a mechanical device which reflects the image obtained from a projector lens, and
an electronic image processor is configured to forward the image obtained from the projector lens.

13. The electronic device of claim 11, wherein the image output and capturing device comprises a camera and is configured to capture the image through a camera lens.

14. The electronic device of claim 11, wherein the image output and capturing device comprise at least one of:
wired network equipment,
wireless network equipment, and
a wired data output device for outputting the image to other display device than the electronic device.

15. The apparatus of claim 11, wherein the apparatus arranged to implement a method of one of claims 5 to 10.
